# EUROPÄISCHE PATENTANMELDUNG

(11) **EP 2 302 767 A2**
(43) Veröffentlichungstag der Anmeldung: **30.03.2011**
(21) Anmeldenummer: 10009880.5
(22) Anmeldetag: 18.09.2010
(51) Int. Cl.: H02K 15/00, H02K 3/24

(54) **Sanierverfahren für die Leiter eines Rotors eines elektrischen Generators**

(30) Priorität: 24.09.2009 DE 102009042706
(71) Anmelder: Sensoplan Aktiengesellschaft, 79801 Hohentengen (DE)
(72) Erfinder: Schubert, Johann, 5506 Maegenwil (CH); Fischer, Dominik, 79801 Hohentengen-Lienheim (DE)
(74) Vertreter: Goy, Wolfgang

(57) **Zusammenfassung**

Ein Verfahren zum Sanieren der Leiter 3 eines Rotors 1 eines elektrischen Generators für die Stromgewinnung in Kraftwerken insbesondere zur Verbesserung der Kühlung sieht vor, daß unter Beibehaltung der vorhandenen Welle 2 sowie unter Beibehaltung des Querschnitts des Grundkanals 4 für die Kühlmediumzuführung die alten Leiter 3 gegen neue Leiter 3 ersetzt werden. Dabei werden in den neuen Leitern 3 die radialen Durchgangskanäle 5 durch die Leiter 3 hinsichtlich Form und/oder Größe und/oder Anordnung und/oder Anzahl neu ausgebildet, um das Temperaturprofil des in Betrieb befindlichen Rotors 1 über seine Länge im Wesentlichen konstant zu halten.

## Beschreibung

Die Erfindung betrifft ein Verfahren zum Sanieren der Leiter eines Rotors eines elektrischen Generators für die Stromgewinnung in Kraftwerken nach dem Oberbegriff des Anspruchs 1; die Erfindung betrifft ferner einen - entsprechenden - Rotor eines elektrischen Generators für die Stromgewinnung in Kraftwerken nach dem Oberbegriff des Anspruchs 7.

Elektrische Generatoren für die Stromgewinnung in Kraftwerken weisen einen Rotor auf. Dieser Rotor besitzt zunächst eine Welle. Auf dieser Welle sind die beiden Pole des Rotors angeordnet. Diese besitzen jeweils eine Wicklung aus mehreren Spulen, wobei jede Spule wiederum aus mehreren Windungen besteht. Diese Windungen sind durch elektrische Leiter aus Kupfer gebildet, die in Nuten eingebettet sind. Dabei erstrecken sich die Leiter zwischen den beiden Wickelköpfen parallel zur Welle. Während des Betriebs des Generators fließt durch die Leiter ein elektrischer Strom. Diese elektrischen Ströme sind vergleichsweise hoch und verursachen eine entsprechende starke Erwärmung. Dies vermindert die Lebensdauer sowie die Laufleistung. Aus diesem Grunde werden die Leiter im Rotor gekühlt.

Zum Kühlen der Leiter wird ein Kühlmedium verwendet, insbesondere bei Generatoren bis ca. 200 MW Luft und darüber Wasserstoff. Zur Zuführung dieses Kühlmediums dient ein Grundkanal, die sogenannte Subnut, welcher sich zwischen der Welle und den Leitern in axialer Richtung erstreckt. Durch diesen Grundkanal wird das Kühlmedium zugeführt. Die Leiter selbst in ihren Nuten weisen eine Mehrzahl von über die Länge verteilte, radiale Durchgangskanäle auf, durch die hindurch das vom Grundkanal kommende Kühlmedium radial nach außen hindurchströmt und dabei die in den Leitern entstandene Wärme aufnimmt.

Derartige Rotoren eines elektrischen Generators für die Stromgewinnung in Kraftwerken haben zweierlei Nachteile. Zum einen verschleißen die Leiter von Zeit zu Zeit, so daß sie gegen neue Leiter ersetzt werden müssen. Zum anderen besteht bei den herkömmlichen Rotoren mit ihren Leitern das Problem, daß im Endbereich der Rotoren die Leitertemperatur höher ist als im Bereich der Rotormitte. Der Grund liegt darin, daß die Durchflußleistung des Kühlmediums bei den Durchgangskanälen in der Mitte höher ist als bei den Durchgangskanälen im Endbereich des Rotors.

Der Erfindung liegt die **Aufgabe** zugrunde, ein Verfahren zum Sanieren der Leiter eines Rotors eines elektrischen Generators für die Stromgewinnung in Kraftwerken insbesondere zur Verbesserung der Kühlung zu schaffen, welches zum einen technisch einfach durchführbar ist und welches zum anderen einen langanhaltenden Erfolg gewährleistet; weiterhin soll ein Rotor eines elektrischen Generators für die Stromgewinnung in Kraftwerken geschaffen werden, welcher sich mit einer verbesserten Kühlung durch eine lange Lebensdauer sowie durch eine höhere Leistung auszeichnet.

Die technische **Lösung** ist verfahrensmäßig gekennzeichnet durch die Merkmale im Kennzeichen des Anspruchs 1.

Die Erfindung schafft ein Sanierverfahren für Leiter eines Rotors eines elektrischen Generators für die Stromgewinnung in Kraftwerken, welches zum einen technisch einfach und kostengünstig durchführbar ist und welches zum anderen den Rotor dauerhaft saniert. Insbesondere dient das erfindungsgemäße Sanierverfahren der Verbesserung der Kühlung der Leiter. Die Grundidee des erfindungsgemäßen Sanierungsverfahrens liegt zunächst darin, daß die - sehr teure - vorhandene Welle weiterhin verwendet wird, da sie in der Regel ohne weiteres wiederverwendet werden kann. Das einzige was, ausgetauscht wird, sind die dem Verschleiß unterliegenden Leiter. Die neuen Leiter werden dabei jedoch nicht identisch den alten Leitern nachgebildet, sondern die neuen Leiter werden hinsichtlich ihrer radialen Durchgangskanäle für das Kühlmedium derart modifiziert, daß der Rotor in axialer Richtung im Wesentlichen gleichmäßig gekühlt wird, insbesondere daß die Leiter im Bereich der Nutaustritte nicht mehr so heiß werden. Es wird dabei nicht davon ausgegangen, daß die Temperatur über die gesamte Länge exakt gleich ist. Die Temperatur kann durchaus innerhalb einer gewissen Schwankungsbreite variieren. Diese Schwankungsbreite ist aber auf jeden Fall geringer als vor der Sanierung. Dies wird erfindungsgemäß dadurch erreicht, daß zur Schaffung eines gleichmäßigen Temperaturprofils über die Länge des Rotors die Form und/oder Größe und/oder Anordnung und/oder Anzahl der radialen Durchgangskanälen neu gestaltet werden, wobei der Querschnitt des Grundkanals nicht verändert wird. Dieses Verfahren wird dabei für jeden Leiter angewendet. Die Durchgangskanäle sind dabei im Ergebnis zur Schaffung des gleichmäßigen axialen Temperaturprofils so auszubilden, daß in den Endbereichen des Rotors die Durchtrittsleistung des Kühlmediums größer ist als im mittleren Bereich des Rotors. Dies bedeutet hinsichtlich der Strömungsverhältnisse im Ergebnis, daß beginnend von außen nach innen durch die erfindungsgemäße Variation der Form und/oder Größe und/oder Anordnung und/oder Anzahl der radialen Durchgangskanäle die Strömungsgeschwindigkeit zur Mitte hin verringert wird. Dies bedeutet, daß im Bereich der Nutaustritte mehr Kühlmedium durch die radialen Durchgangskanäle in den Leitern strömt. Durch diese Maßnahme wird die Lebensdauer und/oder die Leistungsfähigkeit des elektrischen Generators deutlich erhöht.

Eine erste, bevorzugte Variante der konkreten Verfahrensdurchführung schlägt gemäß Anspruch 2 vor, daß ausgehend von den gegebenen Verhältnissen unter Beibehaltung der Welle sowie unter Beibehaltung des Grundkanalquerschnitts sowie in Kenntnis der Form und/oder Größe und/oder Anordnung und/oder Anzahl der Leiter eine Berechnung und/oder eine Computersimulation durchgeführt wird, um ein im Wesentlichen gleiches Temperaturprofil über die Länge des Rotors zu erhalten.

Eine zweite Variante der konkreten Verfahrensdurchführung schlägt Anspruch 3 vor. Die Grundidee besteht darin, daß man von dem alten Rotor ausgeht und dort entsprechende Temperaturprofilmessungen durchführt. In Kenntnis der Ausbildung der dort vorhandenen radialen Durchgangskanäle und in Kenntnis des Temperaturprofils kann man dann ermitteln, wie die neuen radialen Durchgangskanäle hinsichtlich Form und/oder Größe und/oder Anordnung und/oder Anzahl auszubilden sind, daß das Temperaturprofil über die Länge des Rotors gesehen im Wesentlichen konstant ist.

Die Durchgangskanäle können gemäß der Weiterbildung in Anspruch 4 hinsichtlich ihrer Querschnittsform rechteckig, rund oder elliptisch ausgebildet sein. Weitere Formen sind selbstverständlich gleichermaßen denkbar.

Weiterhin können gemäß der Weiterbildung in Anspruch 5 die Durchgangskanäle in Strömungsrichtung gesehen immer den gleichen Querschnitt aufweisen.

Alternativ ist es auch denkbar, gemäß der Weiterbildung in Anspruch 6 die radialen Durchgangskanäle konisch auszubilden. Entsprechend dem Öffnungswinkel des Konus ergeben sich unterschiedliche Düsencharakteristiken mit unterschiedlichen Durchströmungsleistungen.

Die technische **Lösung** betreffend den Rotor eines elektrischen Generators für die Stromgewinnung in Kraftwerken als solchen schlagen die Merkmale im Kennzeichen des Anspruchs 7 vor.

Vorteilhafte Weiterbildungen ergeben sich dabei aus den Unteransprüchen 8 bis 11.

Die damit verbundenen Vorteile hinsichtlich eines gleichmäßigen Temperaturverlaufs über die Länge des Rotors ergeben sich analog den vorstehenden Ausführungen zu den Ansprüchen 1 bis 6.

Ausführungsbeispiele eines erfindungsgemäßen Rotors eines elektrischen Generators für die Stromgewinnung in Kraftwerken unter Verwendung des erfindungsgemäßen Sanierverfahrens werden nachfolgend anhand der Zeichnungen beschrieben. In diesen zeigt:
- Fig. 1a: eine erste Ausführungsform des Rotors in einer schematischen Längsschnittdarstellung;
- Fig. 1b: ein Detailausschnitt aus der Darstellung in Fig. 1a vor der Sa- nierung;
- Fig. 1c: ein Detailausschnitt aus der Darstellung in Fig. 1a nach der Sanierung;
- Fig. 2a: eine zweite Ausführungsform des Rotors in einer schemati- schen Längsschnittdarstellung;
- Fig. 2b: ein Detailausschnitt aus der Darstellung in Fig. 2a vor der Sa- nierung;
- Fig. 2c: ein Detailausschnitt aus der Darstellung in Fig. 2a nach der Sanierung;
- Fig. 3a: eine dritte Ausführungsform des Rotors in einer schematischen Draufsicht auf den Leiter;
- Fig. 3b: ein Detailausschnitt aus der Darstellung in Fig. 3a vor der Sa- nierung;
- Fig. 3c: ein Detailausschnitt aus der Darstellung in Fig. 3a nach der Sanierung;
- Fig. 4a bis 4c: verschiedene Formen der Durchgangskanäle.

Der Rotor 1 eines elektrischen Generators für die Stromgewinnung in Kraftwerken weist eine Welle 2 auf. Auf dieser Welle 2 sind in Nuten Leiter 3 für die beiden Pole des Rotors 1 angeordnet. Diese Pole besitzen dabei jeweils eine Wicklung aus mehreren Spulen, wobei jede Spule wiederum aus mehreren Windungen besteht. Diese Windungen sind durch die Leiter 3 gebildet.

Zwischen der Welle 2 und den Leitern 3 befindet sich ein axialer Grundkanal 4. Dieser dient der Zuführung eines Kühlmediums, insbesondere Luft, zum Kühlen der während des Betriebs des elektrischen Generators sich erwärmenden Leiter 3. Dieser Grundkanal 4 besitzt über die Länge des Rotors 1 einen konstanten Querschnitt.

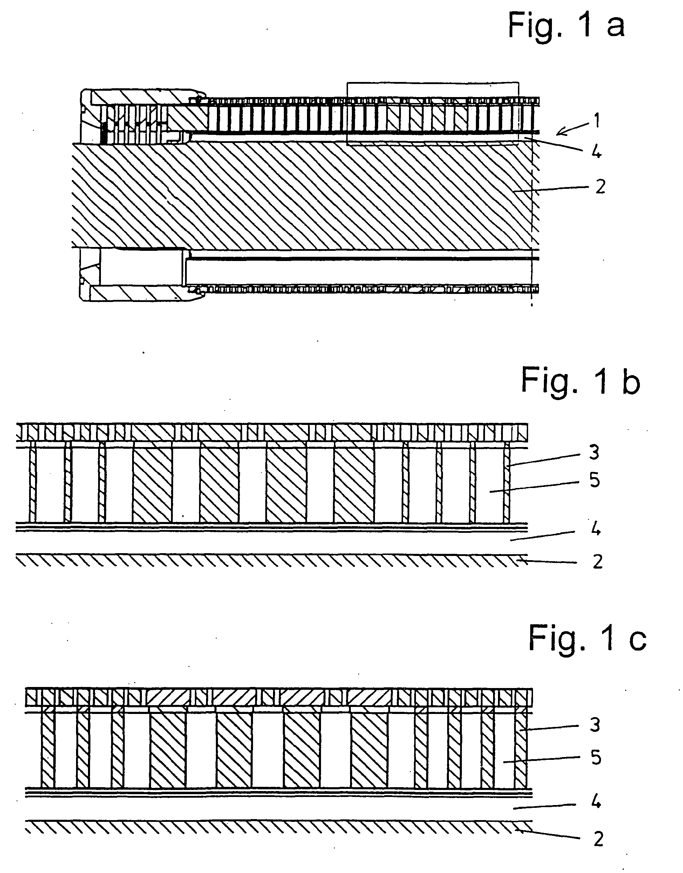

Die Leiter 3 weisen radiale Durchgangskanäle 5 auf. Diese sind in der Ausgangssituation der Fig. 1a und 1b über die Länge des Rotors 1 hinsichtlich Form, Größe und Anordnung gleich ausgebildet. Das Problem bei diesen Leitern 3 mit ihren radialen Durchgangskanälen 5 besteht darin, daß das Temperaturprofil während des Betriebs des Rotors 1 über dessen Länge nicht konstant ist. Vielmehr ist die Temperatur der Leiter 3 im Bereich der beiden Enden des Rotors 1 höher als in der Mitte. Diese hohe Temperatur vermindert die Lebensdauer sowie die Leistungsfähigkeit des elektrischen Generators.

Bei der Sanierung des Rotors 1 werden die vorhandenen Leiter 3 komplett durch neue Leiter 3 ersetzt. Dabei wird jedoch die vorhandene Welle wiederverwendet. Auch der Querschnitt des Grundkanals 4 für die Zuführung des Kühlmediums soll gleich bleiben.

Um über die Länge des Rotors 1 gesehen ein gleichmäßiges Temperaturprofil zu erreichen, werden jedoch die Durchgangskanäle 5 nicht identisch wie bei den alten, ausgebauten Leitern 3 übernommen, sondern die Durchgangskanäle 5 in den neuen Leitern 3 werden hinsichtlich Form und/oder Größe und/oder Anordnung und/oder Anzahl neu gestaltet, und zwar so, daß das Temperaturprofil über die Länge des Rotors 1 gesehen im Wesentlichen gleich bleibt. Hinsichtlich der vorerwähnten Anzahl kann die Zahl der Durchgangskanäle 5 erhöht oder auch verringert werden, auch nur bereichsweise.

Fig. 1c zeigt im Vergleich zu Fig. 1b die neue Situation. Dabei ist erkennbar, daß die in Axialrichtung der Welle 2 gesehe Länge der Durchgangskanäle 5 verkürzt worden ist. Dies bedeutet, daß der Durchgangsquerschnitt kleiner geworden ist, so daß entsprechend weniger Kühlmedium durch den Durchgangskanal 5 hindurchströmt. Da im Bereich des Wickelkopfes bzw. der Nutaustritte die Länge der Durchgangskanäle 5 jedoch gleich geblieben ist, erfolgt dort eine höhere Kühlleistung mit der Konsequenz, daß sich dort die Temperatur in den Leitern 3 verringert.

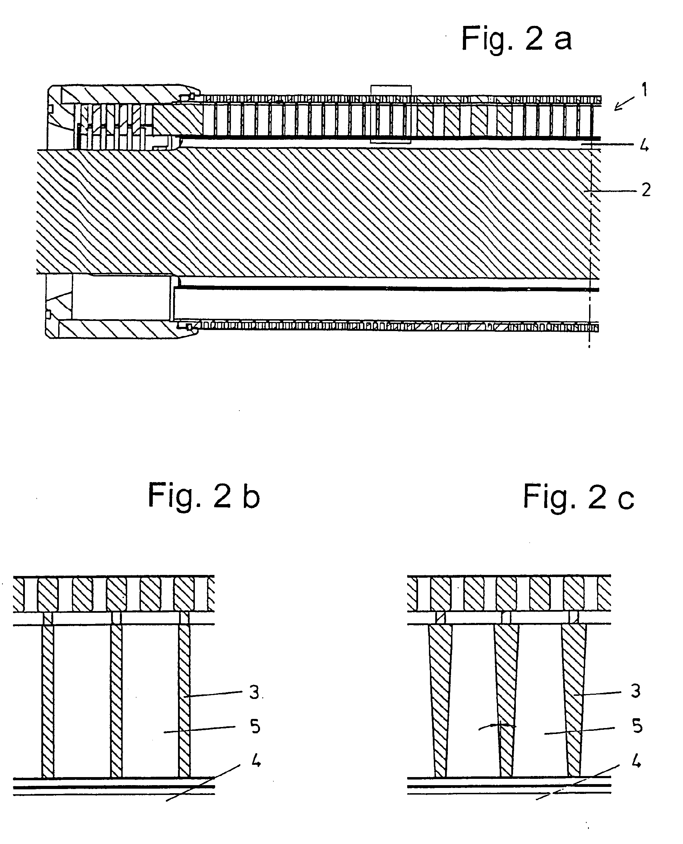

Fig. 2a bis 2c zeigt die entsprechende Situation eines weiteren Ausführungsbeispiels wie gerade eben beschrieben. Der Unterschied zum ersten Ausführungsbeispiel besteht darin, daß hier nicht die Länge der Durchgangskanäle 5 verändert wird, sondern daß ausgehend von der rechteckigen Längsschnittsform (Fig. 2b) zu einer konischen Längsschnittsform (Fig. 2c) übergegangen wird. Diese konische Form bewirkt gleichermaßen eine geringere Durchströmleistung für das Kühlmedium.

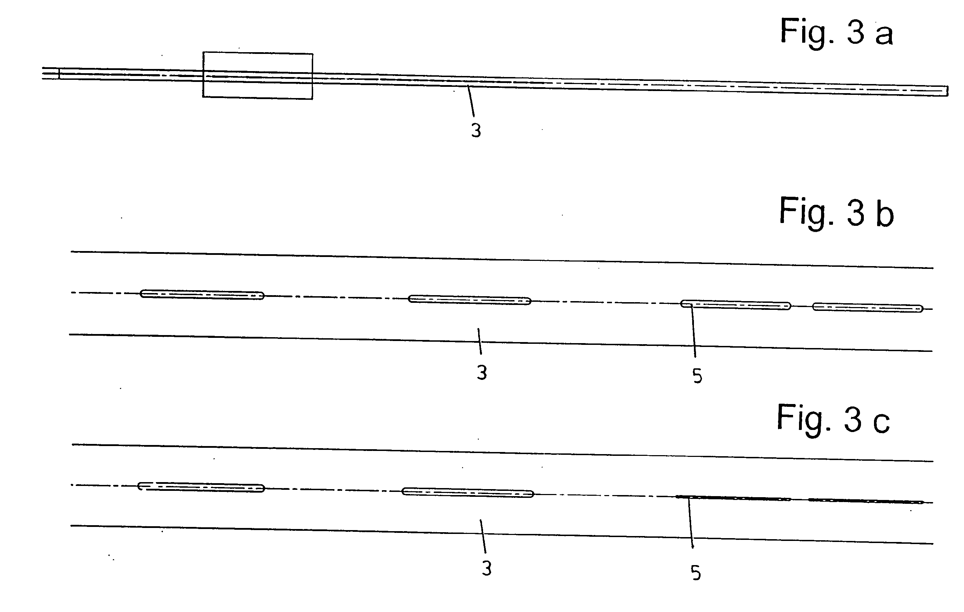

Das Ausführungsbeispiel in den Fig. 3a bis 3c zeigt, daß bei den beiden rechten Durchgangskanälen 5 (Fig. 3b) die Breite verringert worden ist (Fig. 3a). Dadurch wird der Querschnitt und damit die Durchströmungsleistung für das Kühlmedium gleichermaßen verringert.

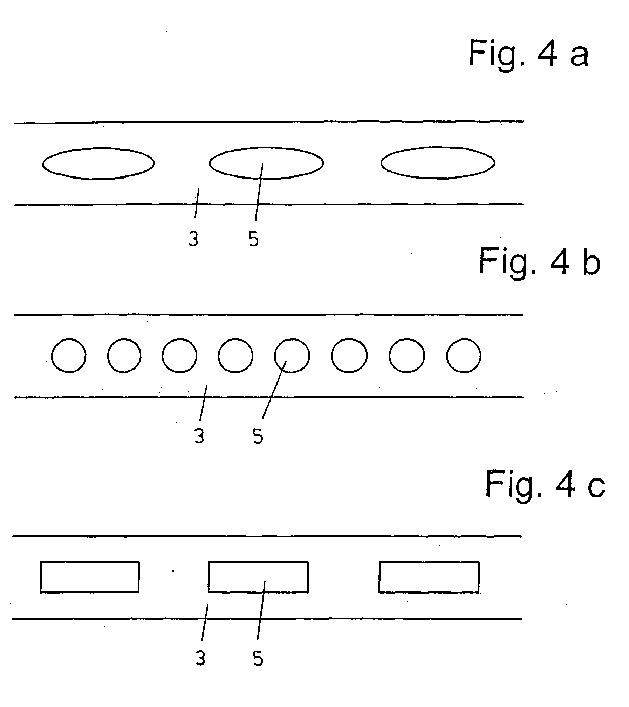

Die Fig. 4a bis 4c schließlich zeigen unterschiedliche Querschnittsformen der Durchgangskanäle 5. So zeigt Fig. 4a eine Ellipsenform, Fig. 4b eine Kreisform und Fig. 4c eine Rechteckform. Andere Querschnittsformen sind denkbar.

### Bezugszeichenliste

- 1: Rotor
- 2: Welle
- 3: Leiter
- 4: Grundkanal
- 5: Durchgangskanal

## Patentansprüche

1. Verfahren zum Sanieren der Leiter (3) eines Rotors (1) eines elektrischen Generators für die Stromgewinnung in Kraftwerken,
wobei der Rotor (1)
eine Welle (2),
weiterhin auf der Welle (2) angeordnete sowie in Axialrichtung der Welle (2) sich erstreckende Leiter (3),
weiterhin einen zwischen der Welle (2) und den Leitern (3) axial sich erstreckenden Grundkanal (4) für die Zuführung eines Kühlmediums sowie
schließlich über die Länge der Leiter (3) verteilte, in den Leitern (3) ausgebildete radiale Durchgangskanäle (5) für das Kühlmedium
aufweist,
**dadurch gekennzeichnet,**
**daß** unter Beibehaltung der vorhandenen Welle sowie unter Beibehaltung des Querschnitts des Grundkanals (4) die alten Leiter (3) gegen neue Leiter (3) ersetzt werden und
**daß** in den neuen Leitern (3) die radialen Durchgangskanäle (5) hinsichtlich Form und/oder Größe und/oder Anordnung und/oder Anzahl derart neu ausgebildet werden, daß die Temperatur der Leiter (3) des in Betrieb befindlichen Rotors (1) über die gesamte Länge im Wesentlichen gleich ist.

2. Verfahren nach Anspruch 1,
**dadurch gekennzeichnet,**
**daß** bei der Ausbildung der neuen radialen Durchgangskanäle (5) in den neuen Leitern (3) hinsichtlich Form und/oder Größe und/oder Anordnung und/oder Anzahl Berechnungen und/oder Computersimulationen hinsichtlich des Temperaturprofils durchgeführt werden.

3. Verfahren nach Anspruch 1,
**dadurch gekennzeichnet,**
**daß** bei der Ausbildung der neuen radialen Durchgangskanäle (5) in den neuen Leitern (3) hinsichtlich Form und/oder Größe und/oder Anordnung und/oder Anzahl zunächst das Temperaturprofil beim alten Rotor (1) gemessen wird und
**daß** ausgehend von diesen Daten die neuen radialen Durchgangskanäle (5) entsprechend hinsichtlich Form und/oder Größe und/oder Anordnung und/oder Anzahl im Vergleich zu den alten radialen Durchgangskanälen (5) modifiziert werden.

4. Verfahren nach einem der vorhergehenden Ansprüche,
**dadurch gekennzeichnet,**
**daß** die Form der Durchgangskanäle (5) rechteckig, rund oder elliptisch ist.

5. Verfahren nach einem der Ansprüche 1 bis 4,
**dadurch gekennzeichnet,**
**daß** die radialen Durchgangskanäle (5) in Strömungsrichtung gesehen immer den gleichen Querschnitt aufweisen.

6. Verfahren nach einem der Ansprüche 1 bis 4,
**dadurch gekennzeichnet,**
**daß** die radialen Durchgangskanäle (5) in Strömungsrichtung gesehen konisch ausgebildet sind.

7. Rotor (1) eines elektrischen Generators für die Stromgewinnung in Kraftwerken,
mit einer Welle (2),
mit auf der Welle (2) angeordneten sowie in Axialrichtung der Welle (2) sich erstreckenden Leitern (3),
mit einem zwischen der Welle (2) und den Leitern (3) axial sich erstreckenden Grundkanal (4) für die Zuführung eines Kühlmediums sowie
mit über die Länge der Leiter (3) verteilte, in den Leitern (3) ausgebildete radiale Durchgangskanäle (5) für das Kühlmedium,
**dadurch gekennzeichnet,**
**daß** in den Leitern (3) die radialen Durchgangskanäle (5) hinsichtlich Form und/oder Größe und/oder Anordnung und/oder Anzahl derart ausgebildet sind, daß die Temperatur der Leiter (3) des in Betrieb befindlichen Rotors (1) über die gesamte Länge im Wesentlichen gleich ist.

8. Rotor nach Anspruch 7,
**dadurch gekennzeichnet,**
**daß** bei der Ausbildung der radialen Durchgangskanäle (5) in den Leitern (3) hinsichtlich Form und/oder Größe und/oder Anordnung und/oder Anzahl Computersimulationen hinsichtlich des Temperaturprofils durchführbar sind.

9. Rotor nach Anspruch 7 oder 8,
**dadurch gekennzeichnet,**
**daß** die Form der Durchgangskanäle (5) rechteckig, rund oder elliptisch ist.

10. Rotor nach einem der Ansprüche 7 bis 9,
**dadurch gekennzeichnet,**
**daß** die radialen Durchgangskanäle (5) in Strömungsrichtung gesehen immer den gleichen Querschnitt aufweisen.

11. Rotor nach einem der Ansprüche 7 bis 9,
**dadurch gekennzeichnet,**
**daß** die radialen Durchgangskanäle (5) in Strömungsrichtung gesehen konisch ausgebildet sind.
